# EUROPÄISCHE PATENTSCHRIFT

(11) **EP 3 633 429 B1**
(45) Veröffentlichungstag und Bekanntmachung des Hinweises auf die Patenterteilung: **08.12.2021**
(21) Anmeldenummer: 18198638.1
(22) Anmeldetag: 04.10.2018
(51) Int. Cl.: G02B 6/36

(54) **VORRICHTUNG ZUM ÜBERTRAGEN VON OPTISCHEN SIGNALEN ZWISCHEN ZWEI DREHBAREN BAUEINHEITEN**
DEVICE FOR TRANSMITTING OPTICAL SIGNALS BETWEEN TWO ROTATABLE MODULES
DISPOSITIF DE TRANSMISSION DE SIGNAUX OPTIQUES ENTRE DEUX UNITÉS STRUCTURALES ROTATIVES

(43) Veröffentlichungstag der Anmeldung: 08.04.2020
(73) Patentinhaber: LTN Servotechnik GmbH, 83624 Otterfing (DE)
(72) Erfinder: AUTENZELLER, Peter, 83620 Feldkirchen-Westerham (DE)
(74) Vertreter: Hofmann, Ernst

(56) Entgegenhaltungen:
- EP-A1- 3 570 084
- FR-A1- 2 487 989
- US-A- 4 124 272
- US-A- 4 815 812
- US-A1- 2014 350 414

## Beschreibung

Die Erfindung betrifft eine Vorrichtung zum Übertragen von optischen Signalen zwischen zwei relativ zueinander drehbaren Baueinheiten, gemäß dem Anspruch 1.

### GEBIET DER TECHNIK

Derartige Baueinheiten werden häufig auch als Rotor und Stator bezeichnet. In diesen Baueinheiten werden optische Signale über Lichtwellenleiter geleitet, die häufig durch einen Luftspalt getrennt axial zueinander versetzt angeordnet sind. Derartige Vorrichtungen werden in vielen technischen Gebieten eingesetzt um Signale von einer ortsfesten auf eine sich drehende Einheit zu übertragen.

### STAND DER TECHNIK

In den Druckschriften US 5,633,963, US 2014/0350414 A1 und US 4,124,272 sind optische Drehverbindungen offenbart, bei denen Signale zwischen zwei koaxialen Lichtwellenleitern übertragen werden.

In der Offenlegungsschrift FR 2487989 wird in einem Ausführungsbeispiel eine Vorrichtung zur Übertragung von optischen Signalen gezeigt, die eine Wälzlageranordnung umfasst und so konfiguriert ist, dass diese durch individuelles Einstellen der Positionen von Aufnahmen für die Wälzkörper justierbar ist.

Weitere Vorrichtungen zum Übertragen von optischen Signalen zwischen zwei Baueinheiten sind aus EP 3 570 084 A1 und US 4 815 812 A bekannt.

### ZUSAMMENFASSUNG DER ERFINDUNG

Der Erfindung liegt die Aufgabe zugrunde, eine Vorrichtung zum Übertragen von optischen Signalen zu schaffen, welche sehr hohe Übertragungsraten ermöglicht und dennoch vergleichsweise einfach herstellbar ist.

Diese Aufgabe wird erfindungsgemäß durch die Merkmale des Anspruchs 1 gelöst.

Die erste Hülse umschließt den ersten Lichtwellenleiter insbesondere nur in einem Abschnitt des Lichtwellenleiters üblicherweise am Ende beziehungsweise in einem Endbereich des Lichtwellenleiters. Die gleiche Betrachtung gilt auch für die zweite Hülse und den zweiten Lichtwellenleiter. Die beiden Lichtwellenleiter sind in der Vorrichtung koaxial zueinander gegenüberliegend angeordnet. Insbesondere weist die Vorrichtung keine Linse oder keinen Kollimator auf.

Durch die Formulierung, dass die erste Buchse über die Lageranordnung vorgespannt ist, soll zum Ausdruck gebracht werden, dass die vom zweiten Federelement eingeleitete Kraft über die Lageranordnung hinweg in die erste Buchse eingeleitet wird. Somit erfolgt der Kraftfluss vom zweiten Federelement über die Lageranordnung hin zur ersten Buchse.

Die Formulierung, wonach das Gehäuse zumindest teilweise die erste Buchse und zumindest teilweise die zweite Buchse sowie zumindest teilweise die Lageranordnung umschließt kann insbesondere so verstanden werden, dass die betreffenden Bauteile in axialer Richtung gänzlich oder nur teilweise vom Gehäuse umschlossen sind beziehungsweise nur axiale Abschnitte der betreffenden Bauteile vom Gehäuse umschlossen sind.

Die Vorrichtung ist so konfiguriert, dass der Strahlengang des durch die Lichtwellenleiter geführten Lichtes mit axialer Richtungskomponente propagiert. Die Lichtwellenleiter können als Multimodefaser oder als Monomodefaser ausgestaltet sein.

Mit Vorteil umschließt die zweite Buchse sowohl die erste Hülse als auch die zweite Hülse. Insbesondere kann die zweite Buchse zweiteilig ausgestaltet sein und eine erste Teilbuchse sowie eine zweite Teilbuchse umfassen. Weiterhin kann dann die zweite Teilbuchse sowohl die erste Hülse als auch die zweite Hülse umschließen. Insbesondere kann die erste Teilbuchse in diesem Fall nur die zweite Hülse umschließen. Außerdem kann die zweite Teilbuchse einen kleineren Außendurchmesser aufweisen als die erste Teilbuchse.

In vorteilhafter Weise stützen sich die Wälzkörper zudem auf einer radial innen liegenden Fläche des Gehäuses ab und können auf dieser abrollen. In diesem Zusammenhang ist zu berücksichtigen, dass das Gehäuse nicht unbedingt einstückig ausgebildet sein muss, sondern dass beispielsweise ein zusätzliches Element im Gehäuse eingebaut sein kann, welches eine Lauffläche für die Wälzkörper bildet.

In weiterer Ausgestaltung der Erfindung sind die erste Hülse und / oder die erste Buchse und / oder die zweite Hülse und / oder die zweite Buchse, gegebenenfalls auch die erste Teilbuchse und / oder die zweite Teilbuchse, aus einem keramischen Material hergestellt, insbesondere aus Aluminiumoxid oder Zirkoniumoxid.

In vorteilhafter Ausgestaltung der Erfindung ist die Vorrichtung so konfiguriert, dass axial zwischen dem ersten Lichtwellenleiter und dem zweiten Lichtwellenleiter ein Luftspalt vorliegt. Insbesondere kann die Vorrichtung so ausgestaltet sein, dass zwischen dem ersten Lichtwellenleiter und dem zweiten Lichtwellenleiter keine Linse beziehungsweise kein Kollimator vorgesehen ist.

Mit Vorteil sind die erste Hülse, die erste Buchse und das Gehäuse der ersten Baueinheit zugeordnet und insbesondere zueinander drehfest angeordnet.

In weiterer Ausgestaltung der Erfindung ist die erste Buchse durch ein erstes Federelement axial gegen das Gehäuse vorgespannt, insbesondere gegen eine nach innen vorstehende Kante oder einen Absatz des Gehäuses.

In vorteilhafter Ausgestaltung der Erfindung ist das erste Federelement der ersten Baueinheit zugeordnet und insbesondere drehfest relativ zum ersten Lichtwellenleiter angeordnet.

In weiterer Ausgestaltung der Erfindung ist das zweite Federelement der ersten Baueinheit zugeordnet.

Vorteilhafterweise sind die zweite Hülse und die zweite Buchse der zweiten Baueinheit zugeordnet.

Mit Vorteil umfasst die Lageranordnung einen zweiten Ring, der ebenfalls eine konische Fläche aufweist, wobei sich die Wälzkörper auch auf der konischen Fläche des zweiten Rings abstützen und auf dieser abrollen können.

In vorteilhafter Ausgestaltung der Erfindung kann der erste Ring oder der zweite Ring oder beide je eine konische Fläche aufweisen. Die Vorrichtung kann aber auch so ausgestaltet sein, dass durch das zweite Federelement ein stirnseitig ebenes Element, beispielsweise ein hohlzylindrischer Körper, gegen die Wälzkörper gedrückt wird, wobei sich dann auf der dem zweiten Federelement gegenüberliegenden Bauteil eine konische Fläche befindet, so das auf diese Weise die Wälzkörper radial nach außen gedrängt werden, beziehungsweise gegen das Gehäuse vorgespannt sind.

Die konischen Flächen können jeweils die Form eines geraden Kreiskegels oder geraden Kreiskegelstumpfes aufweisen. Die Symmetrieachse der konischen Flächen oder Konen ist die Achse, um die die erste Baueinheit relativ zur zweiten Baueinheit drehbar ist.

Mit Vorteil weist die zweite Buchse, insbesondere die zweite Teilbuchse, innen liegend Nuten und Stege auf, so dass die Nuten beispielsweise Schmiermittel aufnehmen können beziehungsweise als Depotvolumen für Schmiermittel dienen können. Vorzugsweise verlaufen die Nuten und Stege entlang einer Richtung, die eine axiale Richtungskomponente aufweist. Beispielsweise können die Nuten und Stege genau in axialer Richtung verlaufen oder wellenförmig beziehungsweise wendelförmig. Alternativ kann die Innenfläche zweiten Buchse auch glatt sein.

Die spezielle Konstruktion der Vorrichtung weist insbesondere eine Lageranordnung auf, die quasi als selbstjustierendes Wälzlager bezeichnet werden kann. Durch die erfindungsgemäße Vorrichtung ist es nun möglich Signale mit einer hervorragenden Qualität dämpfungsarm zu übertragen, so dass extrem hohe Daten- beziehungsweise Übertragungsraten erreichbar sind.

Vorteilhafte Ausbildungen der Erfindung entnimmt man den abhängigen Ansprüchen.

Weitere Einzelheiten und Vorteile der erfindungsgemäßen Vorrichtung ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine Längsschnittdarstellung einer Vorrichtung zum Übertragen von optischen Signalen,
- Figur 2: eine Seitenansicht auf eine Buchse.

### BESCHREIBUNG DER AUSFÜHRUNGSFORMEN

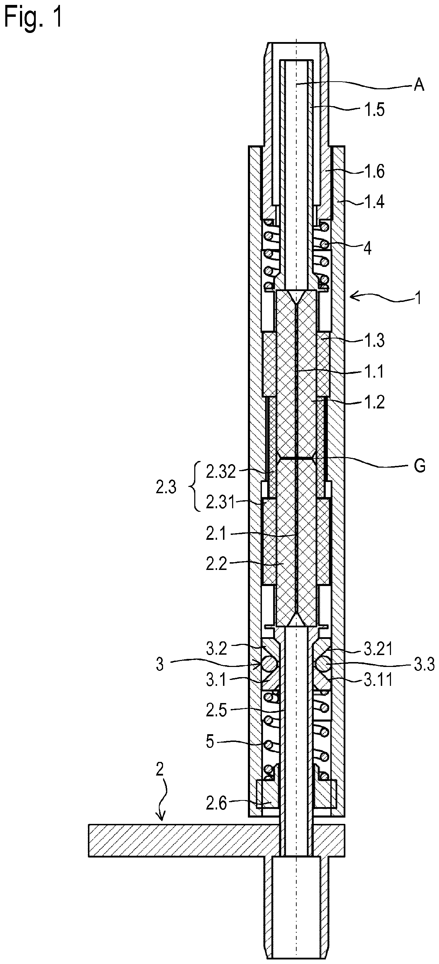

Gemäß der Figur 1 umfasst die erfindungsgemäße Vorrichtung eine erste Baueinheit 1, die als Stator bezeichnet werden kann und eine zweite Baueinheit 2, die beispielsweise als Rotor arbeitet. Die Vorrichtung dient zum Übertragen von optischen Signalen mit hoher Übertragungsrate zwischen der ersten Baueinheit 1 und der zweiten Baueinheit 2, wobei die erste Baueinheit 1 und die zweite Baueinheit 2 relativ zueinander um eine Achse A drehbar angeordnet sind.

Die erste Baueinheit 1 umfasst einen ersten Lichtwellenleiter 1.1, der bezüglich der Achse A zentral in der Vorrichtung angeordnet ist. In einem Abschnitt am Ende des ersten Lichtwellenleiters 1.1 ist dieser von einer ersten Hülse 1.2 umschlossen. Im vorgestellten Ausführungsbeispiel ist die erste Hülse 1.2 aus einem Keramikmaterial hergestellt, zum Beispiel aus Aluminiumoxid oder Zirkoniumoxid. Weiterhin sind hier die Lichtwellenleiter 1.1, 2.1 als Monomodefasern ausgestaltet.

Weiterhin umfasst die erste Baueinheit 1 ein erstes Steckergehäuse 1.5, welches ebenfalls den ersten Lichtwellenleiter 1.1 umschließt. Die erste Baueinheit 1 umfasst zudem ein im vorgestellten Ausführungsbeispiel rohrförmiges Gehäuse 1.4. In dieses Gehäuse 1.4 sind an beiden Enden Innengewinde eingearbeitet. In eines dieser Innengewinde ist ein erstes Vorspannelement 1.6, welches ein Außengewinde aufweist, eingedreht. Zwischen dem ersten Vorspannelement 1.6 und einem Kragen des ersten Steckergehäuses 1.5 befindet sich ein erstes Federelement 4, hier eine Spiralfeder, die im eingebauten Zustand axial vorgespannt ist.

Weiterhin umfasst die erste Baueinheit 1 eine erste Buchse 1.3, welche ebenfalls aus einem Keramikmaterial, etwa aus Aluminiumoxid oder Zirkoniumoxid, hergestellt ist. Diese erste Buchse 1.3 umschließt die erste Hülse 1.2 entlang eines Abschnitts der ersten Hülse 1.2.

Durch die axiale Vorspannung der ersten Feder 4 wird das erste Steckergehäuse 1.5 gegen die erste Buchse 1.3 gedrückt, wobei sich die Buchse 1.3 axial an einem Absatz des Gehäuses 1.4 abstützt. Die erste Buchse 1.3 ist hier durch axiales Anpressen an einen nach innen gerichteten Absatz des Gehäuses 1.4 relativ zum Gehäuse 1.4 drehfest angeordnet beziehungsweise fixiert.

Die zweite Baueinheit 2 weist einen zentralen zweiten Lichtwellenleiter 2.1 auf. Das Ende des zweiten Lichtwellenleiters 2.1 wird von einer zweiten Hülse 2.2 umschlossen. Diese zweite Hülse 2.2 wird ihrerseits von einer zweiten Buchse 2.3 umschlossen. Die zweite Buchse 2.3 ist im vorgestellten Ausführungsbeispiel zweiteilig aufgebaut und umfasst demgemäß eine erste Teilbuchse 2.31 und eine zweite Teilbuchse 2.32. Die zweite Teilbuchse 2.32 umschließt sowohl die erste Hülse 1.2 als auch die zweite Hülse 2.2 und weist zudem einen kleineren Außendurchmesser als die erste Teilbuchse 2.31 auf. Die zweite Buchse 2.3 beziehungsweise beide Teilbuchsen 2.31, 2.32 sind aus Keramikmaterial hergestellt, insbesondere aus Aluminiumoxid oder Zirkoniumoxid.

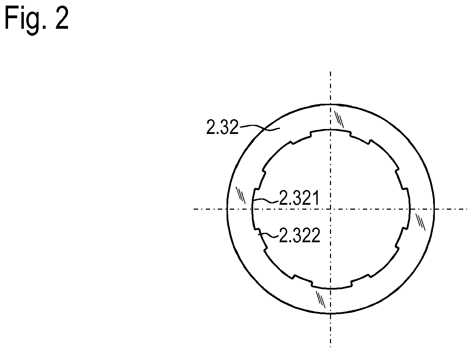

Gemäß der Figur 2 weist die zweite Teilbuchse 2.32 Nuten 2.321 und Stege 2.322 auf, die hier in Axialrichtung verlaufen.

Weiterhin umfasst die zweite Baueinheit 2 ein zweites Steckergehäuse 2.5, welches ebenfalls den zweiten Lichtwellenleiter 2.1 umschließt. Schließlich kann der zweiten Baueinheit 2 auch ein zweites Vorspannelement 2.6 zugeordnet werden.

Die zweite Baueinheit 2 ist gegenüber der ersten Baueinheit 1 mithilfe einer Lageranordnung 3 gelagert. Die Lageranordnung 3 umfasst einen ersten konischen Ring 3.1, einen zweiten konischen Ring 3.2 und Wälzkörper 3.3, die hier als Kugeln ausgestaltet sind. Die Wälzkörper 3.3 befinden sich axial zwischen dem ersten konischen Ring 3.1 und dem zweiten konischen Ring 3.2. Sowohl der erste konische Ring 3.1 als auch der zweite konische Ring 3.2 weisen jeweils eine konische Fläche 3.11 beziehungsweise 3.21 auf. Die Wälzkörper 3.3 stützen sich auf diesen konischen Flächen 3.11, 3.21 ab und rollen im Betrieb der Vorrichtung auf diesen konischen Flächen 3.11, 3.21. Der erste konische Ring 3.1 und der zweite konische Ring 3.2 umgeben das zweite Steckergehäuse 2.5, wobei der zweite konische Ring 3.2 axial gegen einen schrägen Absatz des zweiten Steckergehäuses 2.5 zum Anschlag gebracht werden kann. Die Lageranordnung 3 ist sowohl relativ zum Gehäuse 1.4 axial verschieblich angeordnet als auch zum zweiten Steckergehäuse 2.5. Im vorgestellten Ausführungsbeispiel ist zudem eine relative Drehbarkeit des ersten konischen Rings 3.1 und des zweiten konischen Rings 3.2 relativ zum Gehäuse 1.4 gegeben.

Zwischen dem Vorspannelement 2.6 und dem ersten konischen Ring 3.1 befindet sich ein zweites Federelement 5, hier in Form einer Spiralfeder. Das Vorspannelement 2.6 weist ein Außengewinde auf, das in das Innengewinde des Gehäuses 1.4 eingedreht werden kann um die Vorspannung des zweiten Federelementes 5 einzustellen. Somit drückt das zweite Federelement 5 gegen den ersten konischen Ring 3.1. Da der erste konische Ring 3.1 axial verschieblich relativ zum zweiten Steckergehäuse 2.5 gelagert ist, werden die Wälzkörper 3.3 radial nach außen gedrückt, so dass gewährleistet ist, dass diese die Innenwandung des Gehäuses 1.4 berühren. Die Wälzkörper 3.3 stützen sich somit auf einer radial innen liegenden Fläche des Gehäuses 1.4 ab und rollen im Betrieb der Vorrichtung auf der innen liegenden Fläche des Gehäuses 1.4. Es sind demnach die Wälzkörper 3.3 durch die Abstützung auf der konischen Fläche 3.11 radial gegen das Gehäuse 1.4 vorgespannt. Auf diese Weise ist letztlich der zweite Lichtwellenleiter 2.1 gegenüber dem Gehäuse 1.4 präzise zentriert angeordnet.

Weiterhin wird die axiale Vorspannkraft, die durch das zweite Federelement 5 erzeugt wird, durch den zweiten konischen Ring 3.2 auf das zweite Steckergehäuse 2.5 übertragen. Somit ist die zweite Buchse 2.3 durch das zweite Federelement 5 axial gegen die erste Buchse 1.3, vorgespannt, wobei der Kraftfluss über die Lageranordnung 3 erfolgt.

Die axiale Vorspannkraft wird also über die zweite Buchse 2.3 (insbesondere über die erste Teilbuchse 2.31 und die zweite Teilbuchse 2.32) auf die erste Buchse 1.3 übertragen. Im Gegensatz zur ersten Buchse 1.3 ist die zweite Buchse 2.3 relativ zum Gehäuse 1.4 drehbar und axial verschieblich. Im vorgestellten Ausführungsbeispiel sind die erste Teilbuchse 2.31 und die zweite Teilbuchse 2.32, derart ausgestaltet (insbesondere deren Außendurchmesser), dass diese relativ zum Gehäuse 1.4 drehbar und verschieblich sind.

Somit dreht sich die Stirnfläche der zweiten Buchse 2.3, insbesondere der zweiten Teilbuchse 2.32 relativ zur Stirnfläche der ersten Buchse 1.3. Da sowohl die erste Buchse 1.3 als auch die zweite Buchse 2.3 aus Keramikmaterialien mit einer vergleichsweise glatten Oberfläche hergestellt sind, sind die daraus resultierenden Reibdrehmomente gering.

Durch eine exakte Vorgabe der axialen Länge der zweiten Buchse 2.3 kann die axiale Ausdehnung des Luftspalts G präzise eingestellt werden, die hier 0,1 mm beträgt. Im vorgestellten Ausführungsbeispiel wird zu diesem Zweck die erste Teilbuchse 2.31 auf eine exakte axiale Länge geschliffen. Weiterhin sind die Nuten 2.321 mit Schmiermittel gefüllt, so dass eine reibungsarme relative Drehbarkeit zwischen der ersten Hülse 1.2 und der zweiten Teilbuchse 2.32 erreicht werden kann, weil sich normalerweise die erste Teilbuchse 2.31 relativ zur zweiten Teilbuchse 2.32 nicht dreht. Es kann aber vorkommen, dass aus verschiedensten Gründen insbesondere nach längerem Betrieb der Vorrichtung die erste Teilbuchse 2.31 oder die zweite Teilbuchse 2.32 relativ zum Gehäuse 1.4 nur schwergängig drehbar ist. Insbesondere für diesen Fall hat die zweiteilige Ausgestaltung der zweiten Buchse 2.3 in Form einer ersten Teilbuchse 2.31 und einer zweiten Teilbuchse 2.32 den Vorteil, dass die relative Drehung von der Kontaktfläche zwischen der ersten Buchse 1.3 und der zweiten Teilbuchse 2.32 auf die Kontaktfläche zwischen der zweiten Teilbuchse 2.32 und der ersten Teilbuchse 2.31 verlagert wird. Dadurch ist auch in diesem Fall ein vergleichsweise reibungsarmer Betrieb der Vorrichtung gewährleistet, weil auch hier das Reibdrehmoment beziehungsweise Bremsmoment relativ gering ist, aufgrund der verwendeten Keramikwerkstoffe und die vergleichsweise glatten Stirnflächen.

Die Vorrichtung zum Übertragen von optischen Signalen weist also hier einen ersten Lichtwellenleiter 1.1 und einen zweiten Lichtwellenleiter 2.1 auf, die mit einem axialen Spalt G einander gegenüberliegend angeordnet sind. Durch die vorgespannte Lageranordnung 3 in Verbindung mit den konischen Flächen 3.11, 3.21 ist auf einfache Weise eine präzise konzentrische Anordnung des ersten Lichtwellenleiters 1.1 relativ zum zweiten Lichtwellenleiter 2.1 gegeben. Dieser Sachverhalt trifft insbesondere für jede relative Winkelstellung sowie für einen weiten Temperaturbereich im Betrieb der Vorrichtung zu. Außerdem ist die Vorrichtung durch die erfindungsgemäße Konstruktion unempfindlich gegenüber von außen eingeleiteten Kippmomenten, beispielsweise durch die Lichtwellenleiter. Die Vorrichtung zeichnet sich zudem durch einen vergleichsweise kleinen Außendurchmesser aus.

Somit ist eine Vorrichtung geschaffen, die zum Übertragen von optischen Signalen zwischen zwei Baueinheiten 1, 2 mit extrem hohen Übertragungsraten geeignet ist.

## Patentansprüche

1. Vorrichtung zum Übertragen von optischen Signalen zwischen einer ersten Baueinheit (1) und einer zweiten Baueinheit (2), die relativ zur ersten Baueinheit (1) um eine Achse (A) drehbar angeordnet ist, wobei die erste Baueinheit (1) einen ersten Lichtwellenleiter (1.1) und die zweite Baueinheit (2) einen zweiten Lichtwellenleiter (2.1) aufweist, wobei die zweite Baueinheit (2) ein zweites Steckergehäuse (2.5) umfasst, welches den zweiten Lichtwellenleiter (2.1) umschließt und die Vorrichtung weiterhin
eine erste Hülse (1.2), eine erste Buchse (1.3) und ein Gehäuse (1.4) umfasst, wobei die erste Hülse (1.2) den ersten Lichtwellenleiter (1.1) und die erste Buchse (1.3) die erste Hülse (1.2) umschließt,
eine zweite Hülse (2.2) und eine zweite Buchse (2.3) umfasst, wobei die zweite Hülse (2.2) den zweiten Lichtwellenleiter (2.1) und die zweite Buchse (2.3) die zweite Hülse (2.2) umschließt und zudem
eine Lageranordnung (3) umfasst, die zumindest einen ersten Ring (3.1) und Wälzkörper (3.3), die sich auf einer konischen Fläche (3.11) des ersten Ringes (3.1) abrollbar abstützen aufweist
wobei die Vorrichtung zudem so konfiguriert ist, dass
das Gehäuse (1.4) zumindest teilweise die erste Buchse (1.3) und zumindest teilweise die zweite Buchse (2.3) sowie zumindest teilweise die Lageranordnung (3) umschließt, wobei
die Lageranordnung (3) sowohl relativ zum Gehäuse (1.4) als auch relativ zum zweiten Steckergehäuse (2.5) axial verschieblich angeordnet ist und die zweite Buchse (2.3) durch ein zweites Federelement (5) axial gegen die erste Buchse (1.3) über die Lageranordnung (3) vorgespannt ist, so dass die vom zweiten Federelement (5) eingeleitete Kraft über die Lageranordnung (3) hinweg in die erste Buchse (1.3) eingeleitet wird und der Kraftfluss vom zweiten Federelement (5) über die Lageranordnung (3) hin zur ersten Buchse (1.3) erfolgt, wobei die Wälzkörper (3.3) durch deren Abstützung auf der konischen Fläche (3.11) radial gegen das Gehäuse (1.4) vorgespannt sind.

2. Vorrichtung gemäß dem Anspruch 1, wobei die zweite Buchse (2.3) sowohl die erste Hülse (1.2) als auch die zweite Hülse (2.2) umschließt.

3. Vorrichtung gemäß einem der vorhergehenden Ansprüche, wobei die zweite Buchse (2.3) zweiteilig ausgestaltet ist und eine erste Teilbuchse (2.31) sowie eine zweite Teilbuchse (2.32) umfasst.

4. Vorrichtung gemäß dem Anspruch 3, wobei die zweite Teilbuchse (2.32) sowohl die erste Hülse (1.2) als auch die zweite Hülse (2.2) umschließt.

5. Vorrichtung gemäß dem Anspruch 3 oder 4, wobei die zweite Teilbuchse (2.32) einen kleineren Außendurchmesser aufweist als die erste Teilbuchse (2.31).

6. Vorrichtung gemäß einem der vorhergehenden Ansprüche, wobei sich die Wälzkörper (3.3) auf einer radial innen liegenden Fläche des Gehäuses (1.4) abrollbar abstützen.

7. Vorrichtung gemäß einem der vorhergehenden Ansprüche, wobei die erste Hülse (1.2) und / oder die erste Buchse (1.3) und / oder die zweite Hülse (2.2) und / oder die zweite Buchse (2.3) aus einem keramischen Material hergestellt sind.

8. Vorrichtung gemäß einem der vorhergehenden Ansprüche, wobei axial zwischen dem ersten Lichtwellenleiter (1.1) und dem zweiten Lichtwellenleiter (2.1) ein Luftspalt (G) vorliegt.

9. Vorrichtung gemäß einem der vorhergehenden Ansprüche, wobei die erste Hülse (1.2), die erste Buchse (1.3) und das Gehäuse (1.4) der ersten Baueinheit (1) zugeordnet sind.

10. Vorrichtung gemäß einem der vorhergehenden Ansprüche, wobei die erste Buchse (1.3) durch ein erstes Federelement (4) axial gegen das Gehäuse (1.4) vorgespannt ist.

11. Vorrichtung gemäß dem Anspruch 10, wobei das erste Federelement (4) der ersten Baueinheit (1) zugeordnet ist.

12. Vorrichtung gemäß einem der vorhergehenden Ansprüche, wobei das zweite Federelement (5) der ersten Baueinheit (1) zugeordnet ist.

13. Vorrichtung gemäß einem der vorhergehenden Ansprüche, wobei die zweite Hülse (2.2) und die zweite Buchse (2.3) der zweiten Baueinheit (2) zugeordnet sind.

14. Vorrichtung gemäß einem der vorhergehenden Ansprüche, wobei die Lageranordnung (3) einen zweiten Ring (3.2) mit einer konischen Fläche (3.22) aufweist, wobei sich die Wälzkörper (3.3) auch auf der konischen Fläche (3.12) des zweiten Rings (3.2) abrollbar abstützen.

15. Vorrichtung gemäß einem der vorhergehenden Ansprüche, wobei die zweite Buchse (2.3), insbesondere die zweite Teilbuchse (2.32), innen liegend Nuten (2.321) und Stege (2.322) aufweist.

## Claims

1. Device for transmitting optical signals between a first structural unit (1) and a second structural unit (2) which is arranged so as to be rotatable about an axis (A) relative to the first structural unit (1), wherein the first structural unit (1) has a first optical fibre (1.1) and the second structural unit (2) has a second optical fibre (2.1), wherein the second structural unit (2) comprises a second connector housing (2.5) which encloses the second optical fibre (2.1), and the device also
comprises a first sleeve (1.2), a first bushing (1.3) and a housing (1.4), wherein the first sleeve (1.2) encloses the first optical fibre (1.1) and the first bushing (1.3) encloses the first sleeve (1.2),
comprises a second sleeve (2.2) and a second bushing (2.3), wherein the second sleeve (2.2) encloses the second optical fibre (2.1) and the second bushing (2.3) encloses the second sleeve (2.2), and additionally
comprises a bearing arrangement (3) which has at least a first ring (3.1) and rolling bodies (3.3) that are supported so as to be able to roll on a conical surface (3.11) of the first ring (3.1), wherein the device is additionally configured such that
the housing (1.4) at least partially encloses the first bushing (1.3) and at least partially encloses the second bushing (2.3) and also at least partially encloses the bearing arrangement (3), wherein
the bearing arrangement (3) is arranged so as to be axially displaceable both relative to the housing (1.4) and relative to the second connector housing (2.5), and the second bushing (2.3) is preloaded axially, by a second spring element (5), against the first bushing (1.3) via the bearing arrangement (3), such that the force introduced by the second spring element (5) is introduced into the first bushing (1.3) by way of the bearing arrangement (3) and the flow of force from the second spring element (5) to the first bushing (1.3) takes place via the bearing arrangement (3), wherein the rolling bodies (3.3) are preloaded radially against the housing (1.4) by being supported on the conical surface (3.11).

2. Device according to Claim 1, wherein the second bushing (2.3) encloses both the first sleeve (1.2) and the second sleeve (2.2).

3. Device according to either of the preceding claims, wherein the second bushing (2.3) is configured in two parts and comprises a first part-bushing (2.31) and a second part-bushing (2.32).

4. Device according to Claim 3, wherein the second part-bushing (2.32) encloses both the first sleeve (1.2) and the second sleeve (2.2).

5. Device according to Claim 3 or 4, wherein the second part-bushing (2.32) has a smaller outside diameter than the first part-bushing (2.31).

6. Device according to one of the preceding claims, wherein the rolling bodies (3.3) are supported so as to be able to roll on a radially internal surface of the housing (1.4).

7. Device according to one of the preceding claims, wherein the first sleeve (1.2) and/or the first bushing (1.3) and/or the second sleeve (2.2) and/or the second bushing (2.3) is/are produced from a ceramic material.

8. Device according to one of the preceding claims, wherein an air gap (G) is present between the first optical fibre (1.1) and the second optical fibre (2.1).

9. Device according to one of the preceding claims, wherein the first sleeve (1.2), the first bushing (1.3) and the housing (1.4) are assigned to the first structural unit (1).

10. Device according to one of the preceding claims, wherein the first bushing (1.3) is preloaded axially against the housing (1.4) by a first spring element (4) .

11. Device according to Claim 10, wherein the first spring element (4) is assigned to the first structural unit (1).

12. Device according to one of the preceding claims, wherein the second spring element (5) is assigned to the first structural unit (1).

13. Device according to one of the preceding claims, wherein the second sleeve (2.2) and the second bushing (2.3) are assigned to the second structural unit (2).

14. Device according to one of the preceding claims, wherein the bearing arrangement (3) has a second ring (3.2) with a conical surface (3.22), wherein the rolling bodies (3.3) are supported so as to be able to roll on the conical surface (3.12) of the second ring (3.2).

15. Device according to one of the preceding claims, wherein the second bushing (2.3), in particular the second part-bushing (2.32) has internal grooves (2.321) and ribs (2.322).

## Revendications

1. Dispositif de transmission de signaux optiques entre une première unité modulaire (1) et une deuxième unité modulaire (2) qui est disposée de manière à pouvoir tourner autour d'un axe (A) par rapport à la première unité modulaire (1), la première unité modulaire (1) présentant un premier guide d'ondes optiques (1.1) et la deuxième unité modulaire (2) présentant un deuxième guide d'ondes optiques (2.1), la deuxième unité modulaire (2) comprenant un deuxième boîtier de connecteur (2.5) qui entoure le deuxième guide d'ondes optiques (2.1), et le dispositif comprenant en outre un premier manchon (1.2), une première douille (1.3) et un boîtier (1.4), le premier manchon (1.2) entourant le premier guide d'ondes optiques (1.1) et la première douille (1.3) entourant le premier manchon (1.2), comprenant un deuxième manchon (2.2) et une deuxième douille (2.3), le deuxième manchon (2.2) entourant le deuxième guide d'ondes optiques (2.1) et la deuxième douille (2.3) entourant le deuxième manchon (2.2), et comprenant en outre un ensemble de palier (3) qui présente au moins une première bague (3.1) et des éléments roulants (3.3) qui prennent appui sur une surface conique (3.11) de la première bague (3.1) de manière à pouvoir rouler, le dispositif étant en outre configuré de telle sorte que le boîtier (1.4) entoure au moins partiellement la première douille (1.3) et entoure au moins partiellement la deuxième douille (2.3) ainsi qu'au moins partiellement l'ensemble de palier (3), l'ensemble de palier (3) étant disposé de manière axialement coulissante à la fois par rapport au boîtier (1.4) et par rapport au deuxième boîtier de connecteur (2.5), et la deuxième douille (2.3) étant axialement précontrainte par un deuxième élément faisant ressort (5) contre la première douille (1.3) par l'intermédiaire de l'ensemble de palier (3) de sorte que la force introduite par le deuxième élément faisant ressort (5) est introduite en passant par l'ensemble de palier (3) dans la première douille (1.3), et le flux de force du deuxième élément faisant ressort (5) s'effectue en passant par l'ensemble de palier (3) jusqu'à la première douille (1.3), les éléments roulants (3.3) étant radialement précontraints contre le boîtier (1.4) par leur appui sur la surface conique (3.11).

2. Dispositif selon la revendication 1, dans lequel la deuxième douille (2.3) entoure à la fois le premier manchon (1.2) et le deuxième manchon (2.2).

3. Dispositif selon l'une quelconque des revendications précédentes, dans lequel la deuxième douille (2.3) est configurée en deux parties, et comprend une première douille partielle (2.31) ainsi qu'une deuxième douille partielle (2.32).

4. Dispositif selon la revendication 3, dans lequel la deuxième douille partielle (2.32) entoure à la fois le premier manchon (1.2) et le deuxième manchon (2.2).

5. Dispositif selon la revendication 3 ou 4, dans lequel la deuxième douille partielle (2.32) présente un diamètre extérieur inférieur à la première douille partielle (2.31).

6. Dispositif selon l'une quelconque des revendications précédentes, dans lequel les éléments roulants (3.3) prennent appui sur une surface radialement interne du boîtier (1.4) de manière à pouvoir rouler.

7. Dispositif selon l'une quelconque des revendications précédentes, dans lequel le premier manchon (1.2) et/ou la première douille (1.3) et/ou le deuxième manchon (2.2) et/ou la deuxième douille (2.3) sont fabriqués en matériau céramique.

8. Dispositif selon l'une quelconque des revendications précédentes, dans lequel un entrefer (G) est présent axialement entre le premier guide d'ondes optiques (1.1) et le deuxième guide d'ondes optiques (2.1).

9. Dispositif selon l'une quelconque des revendications précédentes, dans lequel le premier manchon (1.2), la première douille (1.3) et le boîtier (1.4) sont associés à la première unité modulaire (1).

10. Dispositif selon l'une quelconque des revendications précédentes, dans lequel la première douille (1.3) est axialement précontrainte contre le boîtier (1.4) par un premier élément faisant ressort (4) .

11. Dispositif selon la revendication 10, dans lequel le premier élément faisant ressort (4) est associé à la première unité modulaire (1).

12. Dispositif selon l'une quelconque des revendications précédentes, dans lequel le deuxième élément faisant ressort (5) est associé à la première unité modulaire (1).

13. Dispositif selon l'une quelconque des revendications précédentes, dans lequel le deuxième manchon (2.2) et la deuxième douille (2.3) sont associés à la deuxième unité modulaire (2).

14. Dispositif selon l'une quelconque des revendications précédentes, dans lequel l'ensemble de palier (3) présente une deuxième bague (3.2) dotée d'une surface conique (3.22), les éléments roulants (3.3) prenant également appui sur la surface conique (3.12) de la deuxième bague (3.2) de manière à pouvoir rouler.

15. Dispositif selon l'une quelconque des revendications précédentes, dans lequel la deuxième douille (2.3), en particulier la deuxième douille partielle (2.32), présente à l'intérieur des rainures (2.321) et nervures (2.322).
